# EUROPÄISCHE PATENTANMELDUNG

(11) **EP 3 623 352 A1**
(43) Veröffentlichungstag der Anmeldung: **18.03.2020**
(21) Anmeldenummer: 18193729.3
(22) Anmeldetag: 11.09.2018
(51) Int. Cl.: C04B 20/12, C04B 22/00, C04B 22/06, C04B 22/10, C04B 22/14, C04B 22/16, C04B 20/10, C04B 41/50, C04B 41/52

(54) **VERWENDUNG VON STABILISIERTEN ZEMENTHALTIGEN SUSPENSIONEN ZUR HERSTELLUNG VON ZEMENTBESCHICHTUNGEN**

(71) Anmelder: Baumit Beteiligungen GmbH, 2754 Waldegg (AT)
(72) Erfinder: LORENZ, Jürgen, 2754 Waldegg (AT); BÖCK, Katharina, 2754 Waldegg (AT); RIPKEN, Manuel, 2754 Waldegg (AT)
(74) Vertreter: Sonn & Partner Patentanwälte

(57) **Zusammenfassung**

Die Erfindung betrifft die Verwendung einer stabilisierten zementhaltigen Suspension zur Herstellung einer Zementbeschichtung, wobei die stabilisierte zementhaltige Suspension zur Aktivierung des Aushärteprozesses auf eine mit einem Aktivator beschichtete Oberfläche aufgebracht wird.

## Beschreibung

Die vorliegende Erfindung betrifft die Verwendung einer stabilisierten zementhaltigen Suspension zur Herstellung einer Zementbeschichtung.

Zement ist ein anorganischer feingemahlener Baustoff, der als Bindemittel eingesetzt wird. Nach dem Anrühren mit Wasser härtet Zement aus und bleibt dauerhaft fest. Viele verschiedene Zementarten mit unterschiedlichen Zusammensetzungen und Eigenschaften sind aus dem Stand der Technik bekannt.

Zement hat eine Vielzahl von Anwendungsgebieten, beispielsweise als Bindemittel für Beton, Mörtel oder Estrich. Beispielsweise kommt Zement in Endbeschichtungssystemen zur Beschichtung diverser Wandbildner im Innen- und Außenbereich zum Einsatz.

Üblicherweise wird Zement vor der Verwendung mit Wasser angerührt, was den Aushärteprozess auslöst. Dabei kommt es zur Hydratation - einer Reaktion zwischen den Zementbestandteilen und dem Anmachwasser. Die Festigkeit der zementhaltigen Zusammensetzung nimmt dadurch zu und der Zement erstarrt und erhärtet.

Aus dem Stand der Technik sind stabilisierte zementhaltige Suspensionen bekannt. In derartigen Suspensionen liegt der Zement zwar zusammen mit Wasser vor, der Aushärteprozess wird aber durch einen Stabilisator aufgehalten oder verlangsamt. Der Aushärteprozess kann durch die Zugabe eines Aktivators ausgelöst werden.

Die FR 2 763 937 beschreibt die Verwendung von Borsäure zur Stabilisierung zementhaltiger Suspensionen. Zur Aktivierung des Aushärteprozesses wird der Zusammensetzung Calciumhydroxid zugefügt.

Die EP 0 081 385 beschreibt die Verwendung von entweder Borsäure oder Glucono-1,5-lacton zur Stabilisierung zementhaltiger Suspensionen. Der Aushärteprozess wird dabei um mehrere Tage bis mehrere Monate verlangsamt. Als Aktivator können unterschiedliche Stoffe eingesetzt werden, unter anderem Basen, wie Calciumhydroxid.

Die WO 2013/093344 A1 beschreibt stabilisierte zementhaltige Suspensionen, die Phosphorsäure und andere phosphorhaltige Säuren als Stabilisatoren enthalten. Die beschriebenen Suspensionen können über Monate hinweg stabil sein. Zur Aktivierung des Aushärteprozesses werden Basen eingesetzt.

Die aus dem Stand der Technik bekannten stabilisierten zementhaltigen Suspensionen haben den Nachteil, dass sie vor der Anwendung mit einem Aktivator vermischt werden müssen, um den Aushärteprozesses zu aktivieren. Soll beispielsweise eine Zementbeschichtung auf einer Oberfläche hergestellt werden, ist daher ein separater Arbeitsschritt notwendig, bevor die Zusammensetzung auf die Oberfläche aufgetragen werden kann. Außerdem steht dem Anwender nach Aktivierung des Aushärteprozesses nur eine begrenzte Zeit zur Verfügung, um die zementhaltige Zusammensetzung zu verarbeiten.

Es besteht daher Bedarf an einfacheren Verwendungsmöglichkeiten stabilisierter zementhaltiger Suspensionen. Es ist eine Aufgabe der vorliegenden Erfindung, eine solche Verwendungsmöglichkeit zur Verfügung zu stellen.

Diese Aufgabe wird erfindungsgemäß dadurch gelöst, dass eine stabilisierte zementhaltige Suspension zur Aktivierung des Aushärteprozesses auf eine mit einem Aktivator beschichtete Oberfläche aufgebracht wird.

Bei den bisher im Stand der Technik beschriebenen Verwendungen von stabilisierten zementhaltigen Suspensionen wird der Aktivator vor dem Aufbringen auf die Oberfläche mit der zementhaltigen Suspension vermischt. Bisher wurde es im Gebiet der stabilisierten zementhaltigen Suspensionen als gegeben angesehen, dass eine Vermischung der Suspension mit dem Aktivator vor dem Aufbringen nötig sei, z.B. dass im Fall einer Base als Aktivator, der pH-Wert in der gesamten Suspension erhöht werden müsse. Überraschenderweise hat sich im Zuge der vorliegenden Erfindung herausgestellt, dass der Aushärteprozess ebenfalls ausgelöst werden kann, indem die stabilisierte zementhaltige Suspension auf eine mit dem jeweiligen Aktivator beschichtete Oberfläche aufgebracht wird. Der Aushärteprozess wird dabei in der Nähe der Oberfläche ausgelöst und setzt sich wie eine Kettenreaktion durch die Zementschicht fort.

Die vorliegende Erfindung betrifft daher die Verwendung einer stabilisierten zementhaltigen Suspension zur Herstellung einer Zementbeschichtung, dadurch gekennzeichnet, dass die stabilisierte zementhaltige Suspension zur Aktivierung des Aushärteprozesses auf eine mit einem Aktivator beschichtete Oberfläche aufgebracht wird.

Die vorliegende Erfindung betrifft außerdem ein Verfahren zur Herstellung einer Zementbeschichtung auf einer Oberfläche umfassend die Schritte in beliebiger Reihenfolge:
(1) Auftragen eines Aktivators auf die Oberfläche; und
(2) Auftragen einer stabilisierten zementhaltigen Suspension auf die Oberfläche;
wobei der Kontakt zwischen dem Aktivator und der stabilisierten zementhaltigen Suspension die Aushärtung der zementhaltigen Suspension auslöst.

In einem weiteren Aspekt betrifft die vorliegende Erfindung außerdem ein Kit umfassend:
(1) einen Aktivator; und
(2) eine stabilisierte zementhaltige Suspension;
zur Verwendung gemäß der vorliegenden Erfindung.

Der Begriff "Zementbeschichtung" soll im Rahmen der vorliegenden Erfindung als jede aus Zement hergestellte Schicht verstanden werden. Die Beschichtung muss nicht ausschließlich aus Zement bestehen, Zement muss lediglich bei der Herstellung der Schicht verwendet worden sein. Beispielsweise kann die Zementbeschichtung ein Putz, z.B. ein Wand- oder Deckenputz sein.

Der Aushärteprozess von Beton wird häufig als drei aufeinanderfolgende Phasen umfassend beschrieben: dem Ansteifen, dem Erstarren und dem Erhärten. Die Begriffe "Aushärten" bzw. "Aushärteprozess" sollen im Rahmen der vorliegenden Erfindung als Überbegriff verstanden werden, der allgemein den Übergang von einem nicht festen (flüssigen bzw. suspensionsförmigen) in einen festen Zustand beschreibt. "Aktivierung des Aushärteprozesses" soll im Rahmen der vorliegenden Erfindung als auslösen oder beschleunigen des Aushärteprozesses verstanden werden.

Vorzugsweise enthält die im Rahmen der vorliegenden Erfindung verwendete stabilisierte zementhaltige Suspension einen aluminösen Zement. "Aluminöser Zement" bedeutet in diesem Zusammenhang, dass der Zement Aluminium enthält, vorzugsweise in der Form von Alumiumiumoxid (Al₂O₃). Vorzugsweise enthält der Zement außerdem Calciumoxid (CaO). In einer bevorzugten Ausführungsform kann der Zement außerdem Sulfate enthalten. Vorzugsweise enthält die stabilisierte zementhaltige Suspension daher Calciumoxid, Aluminiumoxid, Sulfate, oder Kombinationen davon.

Viele aus dem Stand der Technik bekannte Stabilisatoren sind besonders effektiv in Kombination mit einem Zement mit hohem Aluminiumanteil. In einer bevorzugten Ausführungsform enthält die stabilisierte zementhaltige Suspension daher einen Zement mit mindestens 1 Gew.-%, vorzugsweise mindestens 2 Gew.-%, besonders bevorzugt mindestens 3 Gew.-%, noch mehr bevorzugt mindestens 5 Gew.-%, noch mehr bevorzugt mindestens 10 Gew.-%, am meisten bevorzugt mindestens 20 Gew.-% Aluminium.

In einer besonders bevorzugten Ausführungsform enthält die stabilisierte zementhaltige Suspension einen Zement entsprechend der europäischen Norm DIN EN 197-1.

Die im Rahmen der vorliegenden Erfindung verwendete stabilisierte zementhaltige Suspension enthält vorzugsweise zumindest einen Stabilisator. Als Stabilisator ist in diesem Zusammenhang ein Stoff zu verstehen, der den Aushärteprozess der zementhaltigen Suspension verhindert oder verlangsamt. Besonders gut geeignete Stabilisatoren sind Borsäure oder phosphorhaltige Säuren. Besonders gut geeignete Stabilisatoren sind außerdem aus der WO 2013/093344 A1 bekannt, deren Inhalt hiermit in diese Anmeldung aufgenommen wird.

In einer bevorzugten Ausführungsform enthält die stabilisierte zementhaltige Suspension Borsäure als Stabilisator.

In einer weiteren, besonders bevorzugten Ausführungsform enthält die stabilisierte zementhaltige Suspension zumindest eine phosphorhaltige Verbindung als Stabilisator, vorzugsweise eine phosphorhaltige Säure, vorzugsweise ausgewählt aus metaPhosphorsäure, Phosphonsäure, Phosphorsäure, Phosphonaten und Verbindungen, die durch die Reaktion mit Wasser eine oder mehrere dieser Verbindungen bilden. In dieser Ausführungsform ist es außerdem bevorzugt, wenn der Aktivator eine Base ist.

Die stabilisierte zementhaltige Suspension kann außerdem Kombinationen von Stabilisatoren enthalten, beispielsweise eine Kombination einer phosphorhaltigen Säure mit Borsäure oder einer Carbonsäure.

Vorzugsweise enthält die stabilisierte zementhaltige Suspension zwischen 0,1 Gew.-% und 20 Gew.-%, noch mehr bevorzugt zwischen 0,1 Gew.-% und 15 Gew.-%, noch mehr bevorzugt zwischen 0,1 Gew.-% und 10 Gew.-%, am meisten bevorzugt zwischen 0,3 Gew.-% und 10 Gew.-% an Stabilisatoren bezogen auf die Gesamtmasse der Zementbestandteile.

Die im Rahmen der Erfindung verwendeten stabilisierten zementhaltigen Suspensionen sind vorzugsweise Teil eines Endbeschichtungssystems. Der Begriff "Endbeschichtungssystem" bezeichnet im Rahmen der vorliegenden Erfindung eine Zusammensetzung, die zur Herstellung einer Zementbeschichtung auf einer Oberfläche aufgetragen werden kann. Beispielsweise kann es sich beim Endbeschichtungssystem um einen Putzmörtel handeln.

Vorzugsweise enthält das Endbeschichtungssystem zusätzlich zu der stabilisierten zementhaltigen Suspension Verdicker und/oder Dispergiermittel. Außerdem kann das Endbeschichtungssystem Füllstoffe und/oder Additive enthalten. Geeignete Verdicker, Dispergiermittel, Füllstoffe und Additive sind dem Fachmann bekannt.

Im Rahmen der vorliegenden Erfindung entspricht der Anteil der stabilisierten zementhaltigen Suspension am Endbeschichtungssystem vorzugsweise zwischen 4 Gew.-% und 30 Gew.-%, besonders bevorzugt zwischen 6 Gew.-% und 20 Gew.-%. Bevorzugt ist außerdem ein Anteil von Verdicker am Endbeschichtungssystem zwischen 0,05 Gew.-% und 0,4 Gew.-%, besonders bevorzugt zwischen 0,1 Gew.-% und 0,2 Gew.-%. Außerdem bevorzugt ist ein Anteil von Füllstoffen am Endbeschichtungssystem zwischen 30 Gew.-% und 90 Gew.-%, besonders bevorzugt zwischen 54 Gew.-% und 81 Gew.-% liegt. Besonders bevorzugt ist außerdem ein Anteil von Dispergiermittel am Endbeschichtungssystem zwischen 0,2 Gew.-% und 1,5 Gew.-%, noch mehr bevorzugt zwischen 0,4 Gew.-% und 0,8 Gew.-%. Außerdem ist es bevorzugt, wenn das Endbeschichtungssystem zwischen 1,5 Gew.-% und 8 Gew.-%, besonders zwischen 2,8 Gew.-% und 4,3 Gew.-%, Additive enthält. Besonders bevorzugt ist es außerdem, wenn das Endbeschichtungssystem Wasser in einem Anteil zwischen 5 Gew.-% und 30 Gew.-%, noch mehr bevorzugt zwischen 10 Gew.-% und 15 Gew.-%, enthält. Im Rahmen der vorliegenden Erfindung ist der pH-Wert des Endbeschichtungssystems vorzugsweise niedriger als 9, 0, besonders bevorzugt niedriger als 8, 5, am meisten bevorzugt niedriger als 8, 0.

Bei vielen aus dem Stand der Technik bekannten stabilisierten zementhaltigen Suspensionen kann der Aushärteprozess durch eine Base als Aktivator aktiviert werden. Beispielsweise kann der Aushärteprozess von stabilisierten zementhaltigen Suspensionen die Borsäure und/oder einer phosphorhaltige Säure als Stabilisator enthalten, durch eine Base aktiviert werden.

Im Rahmen der vorliegenden Erfindung ist es daher besonders bevorzugt, wenn der Aktivator eine Base ist. Vorzugsweise wird die mit einem Aktivator beschichtete Oberfläche durch Aufbringen einer basischen Zusammensetzung auf eine Oberfläche hergestellt. Besonders bevorzugt ist es, wenn die basische Zusammensetzung einen pH-Wert höher als 8,0, noch mehr bevorzugt höher als 8,5, am meisten bevorzugt höher als 9,0, hat.

In einer bevorzugten Ausführungsform enthält die basische Zusammensetzung Verdicker und/oder Dispergiermittel. Außerdem kann die basische Zusammensetzung Füllstoffe und/oder Additive enthalten. Geeignete Verdicker, Dispergiermittel, Füllstoffe und Additive sind dem Fachmann bekannt.

Als besonders geeignet hat sich bei der vorliegenden Erfindung eine Ausführungsform erwiesen, bei der der Aktivator als Voranstrich auf die Oberfläche aufgebracht wird. Ein Voranstrich kann auch als "Grundierung" bezeichnet werden.

Der Voranstrich enthält vorzugsweise zusätzlich Verdicker, Dispergiermittel, Füllstoffe, Additive, oder Kombinationen davon. Geeignete Verdicker, Dispergiermittel, Füllstoffe und Additive sind dem Fachmann bekannt.

Vorzugsweise enthält der Voranstrich einen Anteil von Füllstoffen zwischen 20 Gew.-% und 80 Gew.-%, besonders bevorzugt zwischen 30 Gew.-% und 65 Gew.-%. Besonders bevorzugt ist außerdem ein Anteil von Dispergiermittel am Voranstrich zwischen 0,1 Gew.-% und 1 Gew.-%, noch mehr bevorzugt zwischen 0,2 Gew.-% und 0,6 Gew.-%. Außerdem ist es bevorzugt, dass der Voranstrich zwischen 0,5 Gew.-% und 5 Gew.-%, besonders bevorzugt zwischen 1,4 Gew.-% und 2,2 Gew.-%, Additive enthält. Besonders bevorzugt ist es außerdem, wenn der Voranstrich Wasser in einem Anteil zwischen 15 Gew.-% und 60 Gew.-%, noch mehr bevorzugt zwischen 30 Gew.-% und 45 Gew.-%, enthält.

In einer besonders bevorzugten Ausführungsform ist der Aktivator eine Base und wird in der Form eines Voranstrichs auf die Oberfläche aufgebracht. In dieser Ausführungsform hat der Voranstrich einen pH-Wert höher als 8, 0, besonders bevorzugt höher als 8, 5, noch mehr bevorzugt höher als 9, 0. Als besonders zweckmäßig hat sich bei dieser Ausführungsform erwiesen, dass der Voranstrich aus Kalkmilch (Calciumhydroxid gelöst in Wasser) besteht oder Kalkmilch enthält. Da Calciumhydroxid eine Base ist, kann die mit einem Aktivator beschichtete Oberfläche auf diese Weise einfach hergestellt werden.

In einer weiteren besonders bevorzugten Ausführungsform wird der Aktivator als Spray auf die Oberfläche aufgebracht. In dieser Ausführungsform kann der Aktivator als Spray in einer Sprühdose vorliegen. Die Sprühdose enthält vorzugsweise Treibgase, wie Propan, Butan, Dimethylether; komprimierte Luft, komprimierten Stickstoff, oder Kombinationen davon. In dieser Ausführungsform wird die basische Zusammensetzung vorzugsweise als Aerosol auf die Oberfläche aufgetragen.

In einer weiteren bevorzugten Ausführungsform der vorliegenden Erfindung wird nach Aufbringen der zementhaltigen Suspension auf die mit einem Aktivator beschichtete Oberfläche eine weiterer Aktivator auf die zementhaltige Suspension aufgebracht. Dabei kann es sich entweder um den gleichen Aktivator handeln, mit dem die Oberfläche beschichtet ist, oder um einen anderen Aktivator. Vorzugsweise ist sowohl der Aktivator als auch der weitere Aktivator eine Base. Vorzugsweise kann der weitere Aktivator in der Form eines Sprays auf die Oberfläche aufgesprüht werden. Das Aufbringen eines weiteren Aktivators hat den Vorteil, dass der Aushärteprozess der stabilisierten zementhaltigen Suspension sowohl auf der Seite der beschichteten Oberfläche, als auch auf der der Oberfläche abgewandten Seite ausgelöst wird. Dadurch können insbesondere dicke Schichten der stabilisierten zementhaltigen Suspension schnell aushärten.

Eine weitere Ausführungsform der vorliegenden Erfindung betrifft die Verwendung einer stabilisierten zementhaltigen Suspension zur Herstellung einer Zementbeschichtung, wobei die stabilisierte zementhaltige Suspension auf eine Oberfläche aufgebracht wird und der Aushärteprozess durch das nachfolgende Aufbringen eines Aktivators aktiviert wird. Diese Ausführungsform hat den Vorteil, dass die Oberfläche nicht zwingend mit einem Aktivator beschichtet sein muss. Der Aktivator wird vorzugsweise in der Form eines Sprays aufgebracht.

Im Rahmen der vorliegenden Erfindung ist es bevorzugt, wenn die zementhaltige Suspension nach dem Aushärten eine Schicht mit einer mittleren Schichtdicke von mindestens 0,5 mm (Millimeter), besonders bevorzugt mindestens 1, 0 mm, noch mehr bevorzugt mindestens 1, 5 mm, am meisten bevorzugt mindestens 2, 0 mm bildet.

Im Rahmen der vorliegenden Erfindung ist es außerdem bevorzugt, wenn die Oberfläche eine mineralische Oberfläche ist. Besonders bevorzugt ist es, wenn die Oberfläche eine Wand im Innen- oder Außenbereich, eine Raumdecke, oder ein Teil davon ist. Bevorzugt ist es außerdem, wenn die Zementbeschichtung Teil eines Putzes, vorzugsweise eines Wand- oder Deckenputzes, ist.

Die vorliegende Erfindung wird durch die folgenden Beispiele illustriert, auf welche sie selbstverständlich nicht eingeschränkt ist.

Sämtliche Prozent-Angaben (%) in den Beispielen, wie auch in der gesamten Anmeldung, beziehen sich, wenn nicht anders gekennzeichnet, auf Gewichtsprozent.

### Beispiel 1 - Endbeschichtungssystem mit 11 Gew. -% zementhaltige Suspension

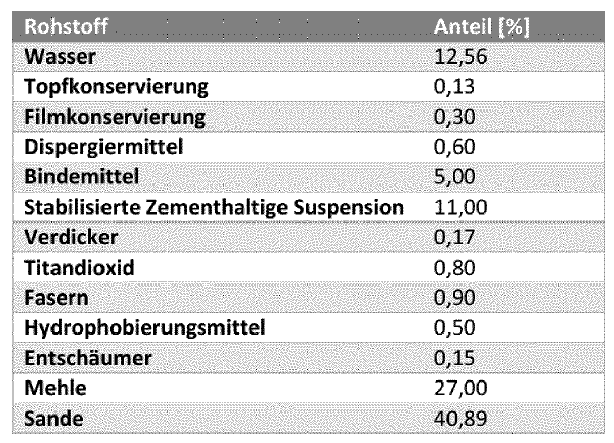

### Beispiel 2 - Endbeschichtungssystem mit 18,3 Gew. -% zementhaltige Suspension

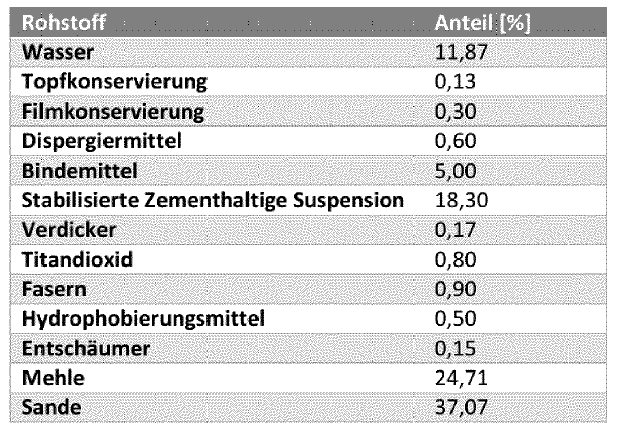

### Beispiel 3 - Voranstrich mit Kalziumhydroxid als Aktivator

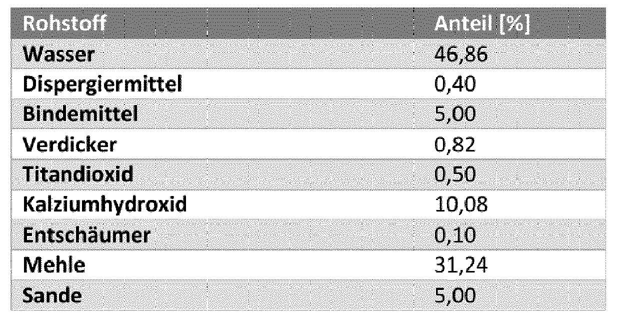

### Beispiel 4 - Voranstrich mit Natriumwasserglas als Aktivator

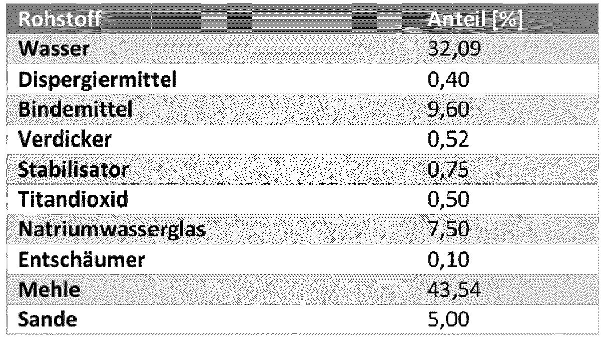

### Beispiel 5 - Voranstrich mit Kaliwasserglas als Aktivator

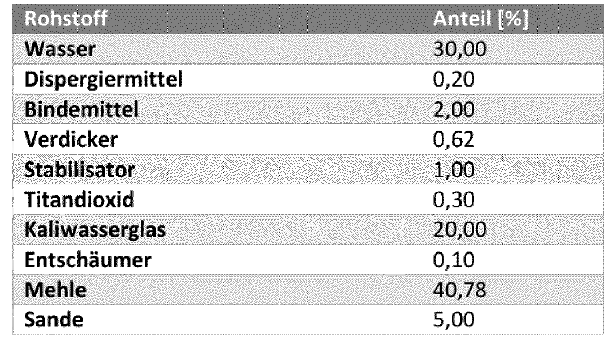

### Beispiel 6 - Voranstrich mit Kaliwasserglas (KOH) als Aktivator

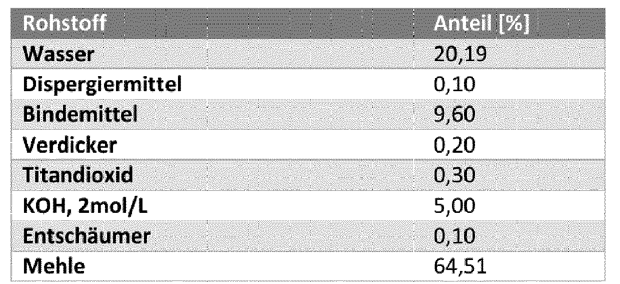

### Beispiel 7 - Herstellung einer Zementbeschichtung

Zur Herstellung einer Zementbeschichtung auf einer Wand wird ein Voranstrich von Beispiel 3, 4, 5, oder 6 auf die Wand aufgetragen. Anschließend wird ein Endbeschichtungssystem von Beispiel 1 oder 2 auf die Wand aufgetragen. Der Kontakt des Endbeschichtungssystems mit der mit dem Aktivator beschichteten Oberfläche löst den Aushärtevorgang der stabilisierten zementhaltigen Suspension aus und eine feste Zementbeschichtung entsteht.

## Patentansprüche

1. Verwendung einer stabilisierten zementhaltigen Suspension zur Herstellung einer Zementbeschichtung, **dadurch gekennzeichnet, dass** die stabilisierte zementhaltige Suspension zur Aktivierung des Aushärteprozesses auf eine mit einem Aktivator beschichtete Oberfläche aufgebracht wird.

2. Verwendung gemäß Anspruch 1, **dadurch gekennzeichnet, dass** die stabilisierte zementhaltige Suspension Calciumoxid, Aluminiumoxid, Sulfate, oder Kombinationen davon enthält.

3. Verwendung gemäß Anspruch 1 oder 2, **dadurch gekennzeichnet, dass** die stabilisierte zementhaltige Suspension zumindest eine phosphorhaltige Verbindung als Stabilisator enthält, vorzugsweise eine phosphorhaltige Säure, vorzugsweise ausgewählt aus metaPhosphorsäure, Phosphonsäure, Phosphorsäure, Phosphonaten und Verbindungen, die durch die Reaktion mit Wasser eine oder mehrere dieser Verbindungen bilden.

4. Verwendung gemäß einem der Ansprüche 1 bis 3, **dadurch gekennzeichnet, dass** der Aktivator eine Base ist.

5. Verwendung gemäß Anspruch 4, **dadurch gekennzeichnet, dass** die mit einem Aktivator beschichtete Oberfläche durch Aufbringen einer basischen Zusammensetzung auf eine Oberfläche hergestellt wird.

6. Verwendung gemäß Anspruch 5, **dadurch gekennzeichnet, dass** die basische Zusammensetzung einen pH-Wert höher als 8,5 hat.

7. Verwendung gemäß einem der Ansprüche 1 bis 6, **dadurch gekennzeichnet, dass** der Aktivator als Voranstrich oder als Spray auf die Oberfläche aufgebracht wird.

8. Verwendung gemäß einem der Ansprüche 1 bis 7, **dadurch gekennzeichnet, dass** nach Aufbringen der zementhaltigen Suspension auf die mit einem Aktivator beschichtete Oberfläche eine weiterer Aktivator auf die zementhaltige Suspension aufgebracht wird.

9. Verwendung gemäß einem der Ansprüche 1 bis 8, **dadurch gekennzeichnet, dass** die zementhaltige Suspension nach dem Aushärten eine Schicht mit einer mittleren Schichtdicke von mindestens 0,5 mm bildet.

10. Verwendung gemäß einem der Ansprüche 1 bis 9, **dadurch gekennzeichnet, dass** die Oberfläche eine Wand im Innen- oder Außenbereich, eine Raumdecke, oder ein Teil davon ist.

11. Verfahren zur Herstellung einer Zementbeschichtung auf einer Oberfläche umfassend die Schritte in beliebiger Reihenfolge:
(1) Auftragen eines Aktivators auf die Oberfläche; und
(2) Auftragen einer stabilisierten zementhaltigen Suspension auf die Oberfläche;
wobei der Kontakt zwischen dem Aktivator und der stabilisierten zementhaltigen Suspension die Aushärtung der zementhaltigen Suspension auslöst.

12. Verfahren gemäß Anspruch 11, **dadurch gekennzeichnet, dass** die stabilisierte zementhaltige Suspension zumindest eine phosphorhaltige Verbindung als Stabilisator enthält, vorzugsweise eine phosphorhaltige Säure, vorzugsweise ausgewählt aus metaPhosphorsäure, Phosphonsäure, Phosphorsäure, Phosphonaten und Verbindungen, die durch die Reaktion mit Wasser eine oder mehrere dieser Verbindungen bilden.

13. Verfahren gemäß Anspruch 11 oder 12, **dadurch gekennzeichnet, dass** der Aktivator eine Base ist.

14. Kit umfassend:
(1) einen Aktivator; und
(2) eine stabilisierte zementhaltige Suspension;
zur Verwendung gemäß einem der Ansprüche 1 bis 11 oder zur Verwendung in einem Verfahren gemäß einem der Ansprüche 12 bis 14.
